Europäisches Patentamt

European Patent Office

Office européen des brevets

(19)

(11) Numéro de publication : **0 307 302 B1**

# FASCICULE DE BREVET EUROPEEN

(12)

(45) Date de publication du fascicule du brevet :
**15.01.92 Bulletin 92/03**

(51) Int. Cl.$^5$ : **G01T 3/00,** G01N 23/222

(21) Numéro de dépôt : **88402239.3**

(22) Date de dépôt : **06.09.88**

(54) **Dispositif de contrôle de criticité et de mesure de concentration de matière fissile.**

(30) Priorité : **08.09.87 FR 8712423**

(43) Date de publication de la demande :
**15.03.89 Bulletin 89/11**

(45) Mention de la délivrance du brevet :
**15.01.92 Bulletin 92/03**

(84) Etats contractants désignés :
**DE GB**

(56) Documents cités :
**US-A- 3 222 521**
**US-A- 4 617 466**
**US-A- 4 682 043**
**PATENT ABSTRACTS OF JAPAN, vol. 8, no. 65**
**(P-263)[1502], 27 mars 1984; & JP-A-58 211 682**
**(NIPPON GENSHIRYOKU JIGYO K.K.) 09-**
**12-1983**

(73) Titulaire : **COMMISSARIAT A L'ENERGIE**
**ATOMIQUE Etablissement de Caractère**
**Scientifique Technique et Industriel**
**31/33, rue de la Fédération**
**F-75015 Paris (FR)**

(72) Inventeur : **Bernard, Patrice**
**7, Place des Héliades**
**F-13770 Venelles (FR)**
Inventeur : **Cloue, Jean**
**11, rue des Muriers**
**F-04100 Manosque (FR)**
Inventeur : **Pinel, Jacques**
**3, la Colline**
**F-84120 Beaumont de Pertuis (FR)**
Inventeur : **Romeyer-Dherbey, Jacques**
**49 ter, Avenue Saint-Jérôme**
**F-13100 Aix en Provence (FR)**

(74) Mandataire : **Mongrédien, André et al**
**c/o BREVATOME 25, rue de Ponthieu**
**F-75008 Paris (FR)**

EP 0 307 302 B1

**Description**

La présente invention concerne un procédé de contrôle de criticité de matière nucléaire.

Dans les installations nucléaires du cycle du combustible ou de production d'énergie se trouvent présentes des matières fissiles. Il est nécessaire de contrôler l'absence de risques de criticité due à une accumulation de ces matières qui risquerait de conduire à une réaction en chaîne divergente. Il peut être nécessaire également de mesurer quantitativement la teneur en matière fissile.

On connaît déjà des dispositifs utilisant des méthodes passives pour résoudre ces problèmes. Ces méthodes sont basées sur la détection des radiations neutroniques naturelles provenant des fissions spontanées ou des interactions des particules alpha avec des éléments légers produisant également des neutrons.

D'autres méthodes basées sur la détection des rayonnements gamma spontanés sont également utilisées et parfois associées aux méthodes utilisant le comptage neutronique.

Toutefois, ces méthodes sont sujettes à certaines limitations. Il est nécessaire de bien connaître la composition isotopique des noyaux lourds dans la zone à contrôler. De plus, ces méthodes ne peuvent pas être utilisées sur les cycles d'uranium parce qu'elles ne donnent pas de résultats significatifs.

Par ailleurs, on connaît du document US-A-3222521 une méthode active pour mesurer la concentration de matière fissile dans un élément combustible. Pour cela, on mesure le nombre de neutrons de fission rapides retardés émis par cet élément, en le soumettant successivement à deux flux de neutrons d'énergie moyenne différente.

La présente invention a pour objet un procédé de contrôle de criticité et de mesure de concentration de matière fissile qui remédie à ces inconvénients et qui, en particulier, repose sur un procédé d'interrogation neutronique active permettant d'induire des réactions nucléaires qui sont ensuite analysées afin de déterminer quantitativement le contenu en radioéléments des déchets nucléaires.

A cet effet, l'invention concerne un procédé selon la revendication 1.

De préférence, le premier ensemble comporte en outre un château de protection de repli apte à recevoir la source de rayonnement neutronique dans sa position de repli inactive.

Enfin, dans certains cas, il pourra être nécessaire d'utiliser un troisième bloc de matériau hydrogéné, ce bloc étant placé entre la zone à contrôler et ledit second ensemble.

Grâce à ces caractéristiques, on réalise une mesure non instructive et non destructive et qui fournit une information directement représentative de la matière fissile dans la zone à contrôler, significative du facteur de multiplication et de la teneur en matière fissile.

D'autres caractéristiques et avantages de l'invention apparaîtront encore à la lecture de la description qui suit d'un exemple de réalisation donné à titre illustratif et nullement limitatif, en référence aux figures annexées :

— la figure 1 est une vue d'ensemble d'un dispositif de contrôle de criticité de matière fissile conforme à l'invention,

— la figure 2 est un schéma d'un dissolveur pour le retraitement de combustible nucléaire irradié,

— la figure 3 est un exemple d'application d'un dispositif de contrôle de criticité de matière fissile conforme à l'invention appliqué au dissolveur roue de la figure 2,

— la figure 4 est un autre exemple d'application d'un dispositif de contrôle de criticité conforme à l'invention appliqué à la mesure du facteur de multiplication dans un assemblage combustible sous eau.

Les figures 5a à 5e illustrent le traitement des signaux des détecteurs.

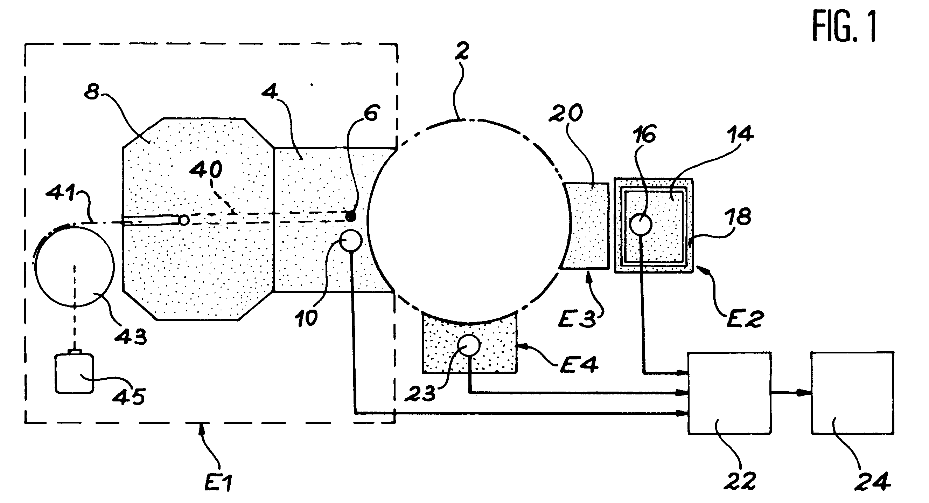

On a représenté sur la figure 1 une vue d'ensemble d'un dispositif de contrôle de criticité de matière fissile conforme à l'invention. On a désigné par la référence 2 une zone à contrôler. Dans cette zone se trouvent des matières fissiles, sous forme solide, par exemple des assemblages combustibles, des crayons ou des pastilles combustibles, sous forme de solides dispersés, comme par exemple des tronçons d'aiguilles combustibles cisaillés, ou encore sous forme liquide (matières nucléaires en solution, par exemple acides), sous forme de dépôt (boues, dépôts pulvérulents).

Il est donc nécessaire de contrôler l'absence de risque de criticité qui serait due à l'accumulation de matières fissiles dans des conditions physiques et géométriques telles que le facteur de multiplication k soit supérieur à 1 et qu'une réaction en chaîne divergente puisse s'établir. Il est nécessaire également de mesurer quantitativement la teneur et/ou la concentration en matières fissiles dans la zone à contrôler 2. Le dispositif objet de l'invention permet précisément le contrôle de criticité et la mesure de la concentration en matières fissiles.

Ce dispositif se compose essentiellement de quatre ensembles, E1, E2, E3, E4.

Le premier ensemble E1 est constitué d'un bloc de matériau hydrogéné : par exemple de type $CH_2$. Un logement est prévu dans ce bloc pour recevoir une source de neutrons rapides 6. Cette source est par exemple une source $Am^{241}$-Be ou $Cf^{252}$. En outre, un château de protection de repli 8 est situé à proximité du bloc 4. Le château de protection de repli est également constitué d'un bloc de matériau hydrogéné. L'ensemble E1 comporte des moyens de transfert permettant de faire passer la source du logement du bloc 4 (position d'irradiation) vers le château de protection de repli 8 (position de repli ou de stockage), et de faire revenir la source 6 en position d'irradiation. La durée de ce transfert est de l'ordre d'une demi-seconde. De préférence, ces moyens de transfert sont constitués par un tube-guide 40 connecté à l'une de ses extrémités au bloc de matériau hydrogéné 4 et à son autre extrémité au château de protection de repli 8. Le tube-guide 40 traverse partiellement le bloc 4 et le château 8. Un câble flexible 41 est fixé à l'une de ses extrémités à un tambour tournant 43 et à son autre extrémité à la source 6. Le tambour 43 est entraîné en rotation au moyen d'un moteur, par exemple un moteur pas à pas 45, dont la rotation dans un sens permet d'introduire la source dans le bloc 4 et la rotation dans l'autre sens de retirer la source 6 du bloc 4 pour l'amener en position de repli dans le château 8.

Selon une autre réalisation, les moyens pour introduire la source en position d'irradiation et pour la ramener en position de stockage sont pneumatiques. Ils comportent un tube-guide 40 de section intérieure suffisamment importante pour permettre le passage de la source. A l'une de ses extrémités, ce tube-guide 40 débouche dans le bloc de matériau hydrogéné 4 et, à son autre extrémité, il est relié au château de protection de repli 8. D'autre part, un tube 42 de plus petite section que le tube-guide 40, de telle sorte que la source 6 ne peut pas pénétrer à l'intérieur de ce tube, possède des extrémités qui débouchent en face des extrémités du tube-guide 40. Le tube 42 est relié à une source de gaz comprimé 44, par exemple une bouteille d'air comprimé. Différentes vannes 46 placées sur le tube 42 et sur un tube 48 reliant le tube 42 à la bouteille de gaz comprimé 44 permettent de propulser pneumatiquement la source 6 avec une grande célérité pour l'introduire à l'intérieur du bloc de matériau hydrogéné en position d'irradiation de la zone à contrôler ou pour la faire revenir dans le château de protection 8.

D'autre part, l'ensemble E1 comprend un détecteur de neutrons 10 constitué par exemple par une chambre à fission ou un détecteur de type He³. Le détecteur 10 est placé à côté de la source de neutrons 6 à l'intérieur du matériau hydrogéné 4. Le détecteur peut être placé dans la zone à contrôler ou en dehors de cette zone.

Par ailleurs, le dispositif de contrôle de criticité comporte un second ensemble E2 constitué d'un second bloc 14 de matériau hydrogéné, par exemple de type $CH_2$ dans lequel est placé un détecteur de neutrons 16 du type chambre à fission ou détecteur à He³. Le bloc de matériau hydrogéné 14 est entouré d'un matériau 18 absorbant fortement les neutrons thermiques, par exemple le carbure de bore et/ou le cadmium.

L'ensemble E2 est placé à l'opposé de l'ensemble E1 par rapport à la source à contrôler. Ainsi, comme on peut le voir sur la figure 1, les ensembles E1 et E2 sont diamétralement opposés. Ils sont séparés par la totalité ou par une partie de la zone à contrôler. Dans le cas où ils ne sont séparés que par une partie de la zone à contrôler, il va de soi que les ensembles E1 et E2 doivent être mobiles par rapport à la zone à contrôler, ou que, à l'inverse, la zone à contrôler doit se déplacer par rapport aux ensembles E1 et E2 qui restent fixes, de telle manière que la totalité de cette zone soit contrôlée.

La position du château de repli 8 par rapport à la zone à contrôler 2 et au reste du dispositif de mesure, ainsi que l'épaisseur de paroi du château de repli sont telles que l'influence de la source 6, lorsqu'elle est en position de repli à l'intérieur du château, sur le signal des détecteurs de neutrons 10 et 16, ainsi que sur la matière fissile contenue dans la zone à contrôler, soit négligeable.

Le dispositif de contrôle de criticité comporte par ailleurs un troisième ensemble E3 dont l'utilisation est optionnelle. Ce troisième ensemble E3 est constitué d'un troisième bloc 20 de matériau hydrogéné, par exemple de type $CH_2$. Ce bloc 20 est placé entre la zone à contrôler 2 et l'ensemble E2.

Enfin, le dispositif de contrôle de l'invention peut comporter au moins un quatrième ensemble E4 constitué d'un bloc de matériau hydrogéné 21 dans lequel est placé un quatrième détecteur 23. Ce détecteur 23 permet d'avoir une efficacité de détection des neutrons retardés plus importante, notamment si la matière fissile est éloignée du détecteur 10.

Le principe de fonctionnement de ce dispositif est le suivant : lorsque la source de neutrons 6 est en position d'irradiation, les neutrons rapides émis par cette source se ralentissent dans la zone à contrôler parce que celle-ci contient des matériaux hydrogénés. Les neutrons rapides induisent des fissions sur les noyaux fissiles contenus dans la zone à contrôler 2. Des neutrons rapides sont réémis lors de ces fissions et provoquent de nouvelles fissions en chaîne. Ces neutrons sont détectés par le détecteur de neutrons 16. Le taux de comptage détecté par le détecteur de neutrons est fonction du facteur de multiplication k de la zone à contrôler. En effet, la distance moyenne que parcourent les neutrons rapides, ayant une énergie de l'ordre de 2 MeV, avant d'être absorbés et provoquer de nouvelles fissions, est de l'ordre de 15 cm. Cependant, conformément à l'invention, la distance entre la source de neutrons 6 et le détecteur 16 diamétralement opposé à cette source par rapport à la zone à contrôler est choisie de manière que l'épaisseur de matériau hydrogéné contenu dans la zone à contrôler 2 soit supérieure à environ 30 cm d'équivalent d'eau liquide. Au cas où la zone à contrôler ne contient pas assez de matériau hydrogéné, on vient rajouter le bloc de matériau hydrogéné 20 présentant une épaisseur adaptée, de manière que l'épaisseur de matériau hydrogéné entre la source et le détecteur devienne égale ou supérieure à environ 30 cm d'équivalent d'eau liquide. Grâce à cette disposition, les neutrons rapides émis par la source 6 ne peuvent pas atteindre le détecteur 16 de telle sorte que seuls les neutrons provenant de nouvelles fissions avec réémission de neutrons sont détectés par le détecteur 16 (la distance caractéristique de décroissance du flux de neutrons rapides des neutrons réémis étant de l'ordre de 4,8 cm). Le détecteur 16 détecte d'autant plus de neutrons rapides émis lors des fissions induites que le facteur de multiplication k est grand.

Le signal utile $Su_2$ du détecteur 16 dû aux neutrons émis lors des fissions induites par les neutrons de la source S s'exprime par la formule :

$$Su_2 = CS \frac{k}{1 - k}$$

dans laquelle S est l'intensité de la source de neutrons ($n \cdot s^{-1}$), k est le facteur de multiplication de la zone 2 à contrôler, C est un facteur constant qui est fonction de la géométrie et des matériaux de la zone à contrôler et du dispositif et de l'efficacité du détecteur 20. Ce facteur constant est déterminé par étalonnage.

En outre, l'ensemble E2 est sensible uniquement aux neutrons rapides parce que le bloc de matériau hydrogéné 14 est entouré d'une couche d'un matériau tel que le carbure de bore ou le cadmium absorbant fortement les neutrons thermiques. Ainsi, les neutrons thermiques dus aux neutrons émis lors des fissions induites par les neutrons de la source 6 sont arrêtés par cette couche 18. En revanche, les neutrons rapides traversent la couche 18. Ils doivent alors être thermalisés, c'est-à-dire ralentis afin de pouvoir être détectés par le détecteur 16. C'est la fonction du matériau hydrogéné 14. Le signal émis par le détecteur 16 est ainsi représentatif du nombre de neutrons prompts. La connaissance du signal utile du détecteur 16, de l'intensité de la source de neutrons et du facteur constant C permet donc de calculer k au moyen de la formule citée ci-dessus.

Toutefois, lorsque les noyaux contenus dans la zone à contrôler sont eux-mêmes émetteurs de neutrons rapides, le signal émis par le détecteur 16 dû à ces neutrons constitue un bruit parasite. Dans ce cas, on mesure le signal $S_2$ du détecteur 16 d'une part lorsque la source 6 est en position d'irradiation et d'autre part lorsque la source est en position de repli dans le château 8. Par une méthode de traitement du signal approprié, on obtient alors le signal $Su_2$ représentatif du facteur de multiplication k et de la teneur en matière fissile de la zone à contrôler. Les moyens de traitement du signal comprennent par exemple un circuit soustracteur 22 qui effectue la différence entre le signal émis par le détecteur 16 lorsque la source 6 est en position d'irradiation et le signal émis par ce même détecteur lorsque la source est en position de repli. En outre, un circuit de moyennage 24 établit la moyenne des différences calculées par le circuit soustracteur au cours d'une période de temps donnée. De tels moyens de traitement du signal sont connus de l'homme du métier. Ils ne seront par conséquent pas décrits plus en détail.

Enfin, dans les situations où le signal dû aux neutrons parasites est négligeable, il n'est pas nécessaire de déplacer la source qui peut être alors fixe.

Le dispositif de l'invention permet également la détection des neutrons retardés, c'est-à-dire des neutrons qui sont émis de façon différée par des nucléides ayant des périodes de décroissance comprises entre quelques dizièmes de seconde et quelques dizaines de secondes.

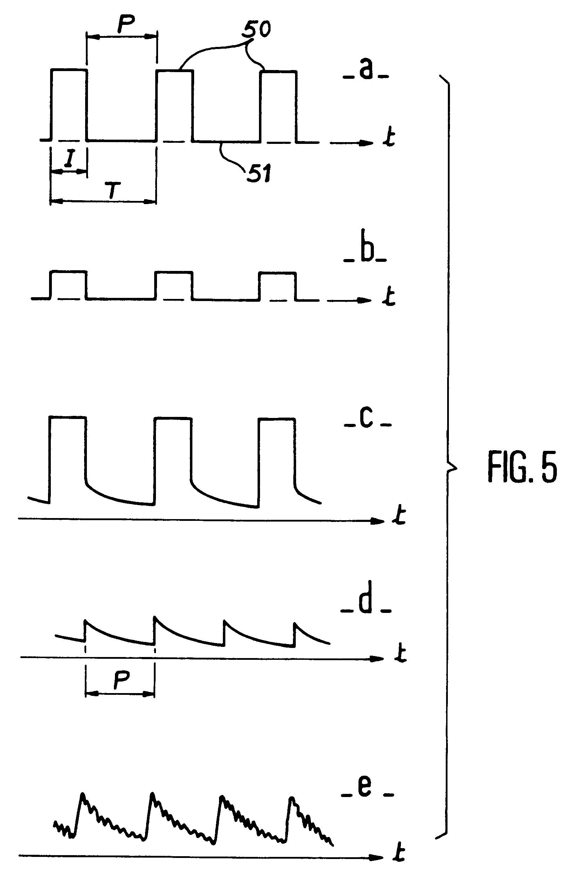

Lorsque la source 6 est en position d'irradiation, elle induit des fissions dans les noyaux des atomes de la matière fissile contenue dans la zone à contrôler. On retire la source pour la faire passer en position de repli et l'on détecte avec les détecteurs 10, 23 et éventuellement 16, les neutrons retardés émis par les précurseurs formés par les fissions induites. Le signal délivré par chacun des détecteurs 10, 23 et éventuellement 16 est fonction de la teneur en noyaux fissiles et du nombre de neutrons retardés émis par fission, ce nombre dépendant du type de noyaux fissiles. Les signaux émis par les détecteurs sont ensuite traités afin de calculer le nombre de neutrons retardés et d'en déduire la teneur en noyaux fissiles. Sur la figure 5a, on a représenté un chronogramme type de la présence/absence de la source de neutrons. La référence 50 désigne les instants où la source de neutrons 6 est en position d'irradiation pendant une durée I et la référence 51 les instants au cours desquels cette source est retirée en position de repli pendant une durée P. L'irradiation et le repli sont périodiques, de période T = I + P.

Lorsque la source est en position d'irradiation (figure 5b), elle induit un nombre constant de fissions dans la matière fissile présente dans la zone à contrôler pendant la durée I. Ces fissions conduisent à l'émission de neutrons prompts, qui peuvent être détectés comme on l'a expliqué précédemment, mais également à l'émission de neutrons retardés qui interviennent quelques dizièmes de seconde à quelques dizaines de secondes après le retrait de la source. Le nombre de neutrons, et par conséquent le signal émis par chacun des détecteurs 10, et D4 tient compte à la fois des neutrons prompts et des neutrons retardés. Ce signal est donc constant pendant la durée I, il chute brutalement après le retrait de la source, ce qui correspond à l'arrêt de l'émission de neutrons prompts, puis diminue progressivement au cours du temps, ce qui correspond aux neutrons retardés (figure 5c).

Par un traitement de signal approprié, on supprime la période I correspondant aux neutrons prompts et retardés afin de conserver seule la période P qui correspond aux neutrons retardés uniquement.

La figure 5d représente une courbe théorique et la figure 5e un signal réel qui tient compte de la présence de bruit parasite.

Les signaux reçus pendant la durée $P = T - I$ sont moyennés. On effectue ensuite sur le résultat un lissage par moindre carré d'une expression G(t) de la forme $G(t) = Af(t) + B$, dans laquelle f(t) est la forme caractéristique d'émission de neutrons retardés suite à une fission induite, f(t) étant une fonction connue, A est représentatif du facteur de multiplication et de la teneur en matière fissile, B est le bruit parasite.

La combinaison du résultat de la mesure du nombre de neutrons prompts et de la mesure du nombre de neutrons retardés permet de déterminer la fraction de $Pu^{239}$ dans l'ensemble des noyaux fissiles de la zone à contrôler, le rapport du nombre de neutrons retardés au nombre de neutrons prompts (encore appelés instantanés) émis lors des fissions étant sensiblement différent, dans le cas du plutonium 239, de celui des autres noyaux fissiles.

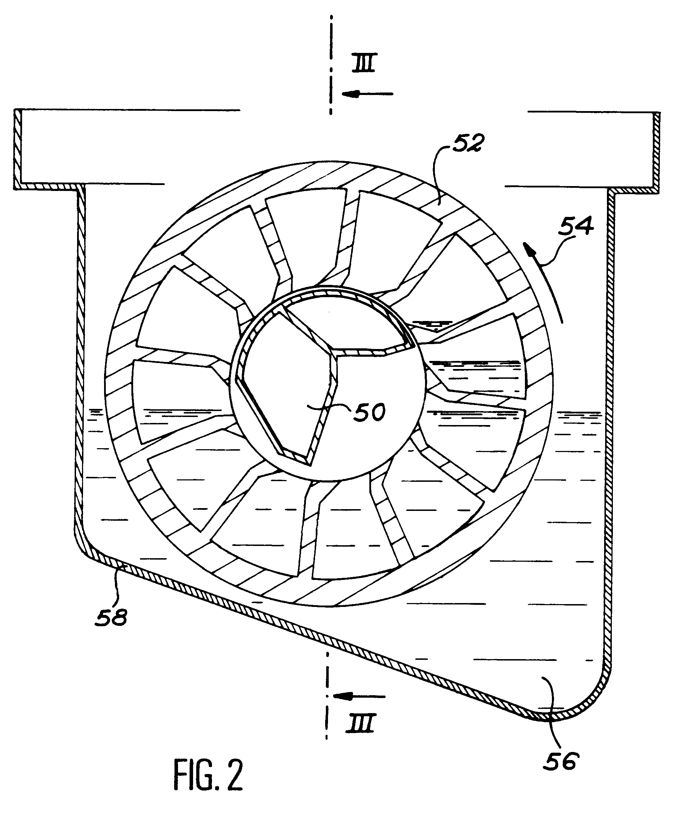

On a représenté sur la figure 2 un schéma d'un dissolveur roue pour le retraitement de combustible irradié. On sait que les aiguilles combustibles de réacteur nucléaire à eau ou à neutrons rapides sont constitués d'une gaine contenant des pastilles de $PuO_2$ et/ou de $UO_2$. Lorsque leur durée de vie est terminée, ces aiguilles sont cisaillées en petits tronçons 57. Ces tronçons 57 arrivent par un conduit 50 débouchant au centre de la roue 52. La roue 52 tourne dans le sens désigné par la flèche 54. Elle est constituée d'une pluralité de godets, par exemple douze. Elle est immergée partiellement dans un bain d'acide nitrique concentré et bouillant 56 contenu dans la cuve du dissolveur 58. La matière nucléaire du combustible irradié est mise en solution par l'acide nitrique avant d'être acheminée vers un traitement ultérieur.

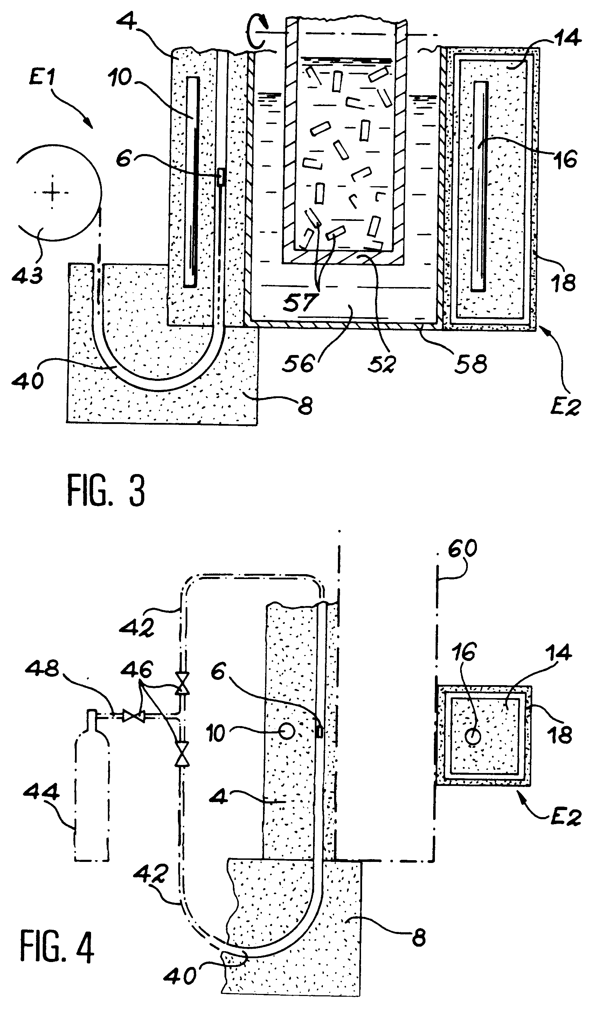

Il importe de s'assurer qu'au cours du remplissage du godet il n'y a pas de risque de criticité. On utilise pour cela un dispositif de détection conforme à l'invention, comme représenté sur la figure 3 qui est une vue en coupe selon la ligne III-III de la roue de la figure 2. D'un côté de la roue (le côté gauche sur la figure 3), on trouve un ensemble E1 comportant une source de neutrons 6 et un détecteur de neutrons 10 situé à proximité de la source 6. Le détecteur et la source sont tous deux contenus à l'intérieur d'un bloc de matériau hydrogéné 4, comme on l'a expliqué précédemment. D'autre part, un tube-guide rectiligne et vertical permet l'effacement de la source pour la faire passer en position de repli. Le château de repli peut être situé au-dessus ou au-dessous de la position d'irradiation de la source. Dans l'exemple de réalisation représenté, le château de repli est situé au-dessous de cette source. D'autre part, on trouve, de l'autre côté de la roue, un ensemble E2 constitué d'un détecteur de neutrons 16 noyé dans un bloc de matériau hydrogéné 14, ce bloc 14 étant lui-même entouré d'une couche 18 absorbant fortement les neutrons thermiques. Il va de soi que dans cet exemple de réalisation, on pourrait également prévoir un troisième bloc tel que le bloc 20 décrit en référence à la figure 1 et ayant pour fonction d'augmenter le trajet des neutrons à l'intérieur du matériau hydrogéné de la zone à contrôler.

Ce dispositif permet par conséquent de calculer le nombre de neutrons prompts et le nombre de neutrons retardés émis par la matière fissile contenue dans le godet de la roue 52 lorsqu'ils passent entre la source 6 et le détecteur 16, qui est par exemple un tube à $He^3$. Par la mesure du nombre de neutrons prompts, on peut déterminer le facteur de multiplication k et vérifier que ce facteur est inférieur à la valeur maximale admissible (inférieur à 1). D'autre part, par la mesure du nombre de neutrons retardés, on peut déterminer la teneur de la matière fissile dans les différents isotopes du plutonium et de l'uranium.

On a représenté sur la figure 4 un deuxième exemple d'application d'un dispositif de contrôle de criticité de matière fissile conforme à l'invention. Comme l'exemple représenté sur la figure 3, ce dispositif se compose d'un ensemble E1 situé d'un côté d'un assemblage combustible 60 à contrôler et d'un ensemble E2 opposé diamétralement à l'ensemble E1 par rapport à l'assemblage 60. De manière classique, l'assemblage 60 est constitué d'un faisceau de crayons combustibles maintenus parallèles entre eux, par exemple par des grilles d'espacement montées sur un réseau de tirants ou tubes-guides solidaires de pièces d'extrémité. Cet assemblage 60 est maintenu sous l'eau afin de garantir une protection contre l'irradiation aux opérateurs. En conséquence, le contrôle de cet assemblage doit également être effectué sous l'eau et les ensembles E1 et E2 sont par conséquent immergés dans l'eau de la piscine de stockage des assemblages. Ces ensembles sont identiques à ceux du dispositif de la figure 3. Leur description ne sera donc pas reprise en détail. La source 6 est également mobile verticalement, ce qui permet la mesure des neutrons prompts et des neutrons retardés. Le détecteur de neutrons peut par exemple être triplé et le système source doublé pour des raisons de redondance et de fiabilité. La source se déplace verticalement, ce qui permet de contrôler l'assemblage sur toute sa hauteur. Ceci permet d'autre part de retirer la source en position de repli.

Le dispositif de détection de criticité conforme à l'invention permet donc des mesures non intrusives et non destructives. Il donne une information qui est directement représentative de la matière fissile dans la zone contrôlée et qui est significative du facteur de multiplication et/ou de la teneur en matière fissile.

## Revendications

1. Procédé pour déterminer le facteur de multiplication k̲ d'une matière fissile placée dans une zone (2) à contrôler et pour déterminer le nombre de neutrons de fission rapides différés contenus dans ces neutrons rapides, consistant :

— à placer une source de rayonnement neutronique (6) dans une position d'irradiation, à l'intérieur d'un logement prévu dans un premier bloc (4) de matériau hydrogéné appartenant à un premier ensemble (E1) situé d'un premier côté de la zone (2) ;

— à mesurer le nombre de neutrons de fission rapides, prompts et différés, émis par la matière fissile, représentatif du facteur de multiplication k̲, au moyen d'un second détecteur de neutrons (16) placé dans un second bloc (14) de matériau hydrogéné entouré d'un matériau (18) arrêtant les neutrons thermiques, de façon à former un second ensemble (E2) séparé du premier ensemble et situé du côté opposé de ladite zone par rapport au premier ensemble ;

— à placer ladite source (6) dans une position de repli inactive ; et

— à mesurer le nombre de neutrons de fission rapides différés émis par la matière fissile, au moyen d'un premier détecteur de neutrons (10) placé dans le premier bloc (4) de matériau hydrogéné.

2. Procédé selon la revendication 1, caractérisé par le fait qu'on place ladite source (6) dans sa position de repli inactive en la transférant dudit logement dans un château de protection de repli (8).

3. Procédé selon l'une quelconque des revendications 1 et 2, caractérisé par le fait qu'on mesure également le nombre de neutrons de fission rapides différés émis par la matière fissile au moyen du second détecteur de neutrons (16), après quoi on calcule la différence entre les nombres de neutrons rapides mesurés par le second détecteur de neutrons lorsque la source est en position d'irradiation et lorsque la source est en position de repli, puis on établit la moyenne des différences calculées au cours d'une période de temps donnée.

4. Procédé selon l'une quelconque des revendications précédentes, caractérisé par le fait qu'on place un troisième bloc (20) de matériau hydrogéné entre la zone à contrôler (2) et le second ensemble (E2).

5. Procédé selon l'une quelconque des revendications précédentes, caractérisé par le fait qu'on mesure également le nombre de neutrons de fission rapides différés émis par la matière fissile au moyen d'un détecteur supplémentaire (23) inclus dans un quatrième bloc (21) de matériau hydrogéné et placé à proximité de la zone (2) à contrôler, entre le premier ensemble (E1) et le second ensemble (E2).

## Patentansprüche

1. Verfahren zum Bestimmen des Multiplikationsfaktors k̲ einer spaltbaren Materie, die in einer zu überwachenden Zone (2) angeordnet ist, um die Anzahl der verzögerten, schnellen Spaltneutronen, die in den schnellen Neutronen enthalten sind, zu bestimmen, welches darin besteht :

— eine Neutronenstrahlungsquelle (6) in eine Bestrahlungsposition im Innern eines Gehäuses anzuordnen, das in einem ersten Block (4) aus hydrogenierten Material, der einer ersten Anordnung (E1), die auf einer ersten Seite der Zone (2) angeordnet ist, zugehört, vorgesehen ist ;

— die Anzahl der schnellen Spaltneutronen, der spontanen und der verzögerten, die von der spaltbaren Materie ausgesandt werden, welche den Multiplikationsfaktor k̲ darstellt, mittels eines zweiten Neutronendetektors (16) zu messen, der in einem zweiten Block (14), der von einem hydrogeniertem Material (18) umgeben ist, das die thermischen Neutronen anhält, angeordnet ist, so daß er eine zweite Anordnung (E2) bildet, die von der ersten Anordnung getrennt ist und bezüglich der ersten Anordnung auf der gegenüberliegenden Seite der Zone angeordnet ist ;

— die Quelle (6) in eine inaktive, zurückgeklappte Stellung zu bringen ; und

— die Anzahl der verzögerten, schnellen Spaltneutronen, die von der spaltbaren Materie ausgestrahlt werden mittels eines ersten Neutronendetektors (10) zu messen, der in dem ersten Block (4) des hydrogenisierten Materials angeordnet ist.

2. Verfahren nach Anspruch 1, gekennzeichnet durch die Tatsache, daß man die Quelle (6) in ihre zurückgeklappte, inaktive Stellung bringt, indem man sie von dem Gehäuse in einen Klappschutzbehälter (8) bringt.

3. Verfahren nach einem der Ansprüche 1 und 2, gekennzeichnet, durch die Tatsache, daß man ebenfalls die Anzahl der verzögerten, schnellen Spaltneutronen, die von der spaltbaren Materie ausgestrahlt werden, mittels des zweiten Neutronendetektors (16) mißt, wonach man die Differenz zwischen der Anzahl der von dem zweiten Neutronendetektor gemessenen schnellen Neutronen, wenn die Quelle in der Bestrahlungsstellung ist und wenn die Quelle in der zurückgeklappten Stellung ist, berechnet und man dann den Mittelwert der berechneten Differenzen im Verlaufe eines gegebenen Zeitintervalls bildet.

4. Verfahren nach einem der vorhergehenden Ansprüche, gekennzeichnet durch die Tatsache, daß man einen dritten Block (20) aus einem hydrogenisierten Material zwischen der zu überwachenden Zone (2) und der zweiten Anordnung (E2) anordnet.

5. Verfahren nach einem der vorhergehenden Ansprüche, gekennzeichnet durch die Tatsache, daß man ebenfalls die Anzahl der verzögerten, schnellen Spaltneutronen, die von der spaltbaren Materie ausgestrahlt werden, mittels eines zusätzliche Detektors (23) mißt, der in einem dritten Block (21) aus hydrogenisiertem Material eingeschlossen ist und in der Nähe der zu überwachenden Zone (2) zwischen der ersten Anordnung (E1) und der zweiten Anordnung (E2) angeordnet ist.

**Claims**

1. Process for determining the gain k of a fissile material placed in an area (2) to be controlled and for determining the number of delayed fast fission neutrons contained in said fast neutrons comprising placing a neutron radiation source (6) in an irradiation position within a recess provided in a first block of hydrogenated material (4) belonging to a first assembly (E1) located on a first side of the area (2) ; measuring the number of prompt and delayed fast fission neutrons emitted by the fissile material and representative of the gain k using a second neutron detector (16) placed in a second block (14) of hydrogenated material surrounded by a material (18) stopping the thermal neutrons, so as to form a second assembly (E2) separate from the first and located on the opposite side of said area with respect to the first assembly ; placing said source (6) in an inactive foldback position ; and measuring the number of delayed fast fission neutrons emitted by the fissile material by means of a first neutron detector (10) placed in the first block (4) of hydrogenated material.

2. Process according to claim 1, characterized in that said source (6) is placed in an inactive foldback position by transferring it from said recess into a foldback protection casket (8).

3. Process according to either of the claims 1 and 2, characterized in that a measurement also takes place of the number of delayed fast fission neutrons emitted by said fissile material by means of the second neutron detector (6), after which calculation takes place of the difference between the number of fast neutrons measured by the second neutron detector when the source is in the irradiation position and when the source is in the foldback position and then the mean of the difference is calculated during a given time period is established.

4. Process according to any one of the preceding claims, characterized in that a third block (20) of hydrogenated material is placed between the area (2) to be controlled and the second assembly (E2).

5. Process according to any one of the preceding claims, characterized in that measurement also takes place of the delayed fast fission neutrons emitted by the fissile material using a supplementary detector (23) included in a fourth block (21) of hydrogenated material and placed in the vicinity of the area (2) to be controlled, between the first assembly (E1) and the second assembly (E2).

FIG. 1

EP 0 307 302 B1

FIG. 2

**FIG. 3**

**FIG. 4**

FIG. 5